# FASCICULE DE BREVET EUROPEEN

(11) **EP 4 479 700 B1**
(45) Date de publication et mention de la délivrance du brevet: **20.05.2026**
(21) Numéro de dépôt: 23702835.2
(22) Date de dépôt: 06.02.2023
(51) Int. Cl.: F28F 21/08, F28F 3/12, F28D 21/00

(54) **DISPOSITIF D'ÉCHANGE THERMIQUE ET PROCÉDÉ DE RACCORDEMENT DUDIT DISPOSITIF**
WÄRMETAUSCHERVORRICHTUNG UND VERFAHREN ZUM ANSCHLUSS DER VORRICHTUNG
HEAT EXCHANGE DEVICE AND METHOD FOR CONNECTING THE DEVICE

(30) Priorité: 18.02.2022 FR 2201465
(43) Date de publication de la demande: 25.12.2024
(73) Titulaire: A. RAYMOND ET CIE, 38000 Grenoble (FR)
(72) Inventeur: GRUNY, Amandine, Evelyne, 68128 VILLAGE-NEUF (FR); BRENIAUX, Marie-Hélène, Jeanne, Isabelle, 68390 BALDERSHEIM (FR); DROUVILLE, Laure, Marie, 67300 SCHILTIGHEIM (FR); KROH, Dominique, 68220 HESINGUE (FR); BOIS, Mathias, 38800 CHAMPAGNIER (FR)
(74) Mandataire: IP Trust
(86) Numéro de dépôt international: PCT/EP2023/052826
(87) Numéro de publication internationale: WO 2023/156235

(56) Documents cités:
- EP-B1- 2 975 354
- FR-A1- 3 097 627
- US-A1- 2021 270 546
- US-B2- 9 821 513

## Description

### DOMAINE DE L'INVENTION

L'invention se rapporte au domaine des dispositifs d'échange thermique, et notamment des dispositifs d'échange thermique susceptibles d'être mis en œuvre dans le domaine automobile. Plus particulièrement, la présente invention concerne un dispositif d'échange thermique et un procédé de raccordement d'une plaque d'échange thermique.

### ARRIERE PLAN TECHNOLOGIQUE DE L'INVENTION

Les blocs batterie des véhicules automobiles sont généralement composés de cellules élémentaires solidaires d'un châssis et couplées à des moyens d'échange thermique configurés pour réguler en température (réchauffer ou refroidir) les cellules élémentaires lorsque ces dernières sont en fonctionnement.

Ces moyens d'échange thermiques peuvent notamment comprendre des plaques d'échange de chaleur ménageant un canal de circulation fluidique dans lequel un fluide caloporteur est susceptible de circuler.

Les moyens d'échanges thermique sont également raccordés à un circuit fluidique externe. Plus particulièrement, ce raccordement met en œuvre des embouts de raccordement. Ces derniers sont généralement sertis, soudés ou encore brasés sur la surface des plaques d'échange thermique.

A cet égard, les documents WO2020/254757 A1, WO2020/031221 A1 et FR2832790 A1 divulguent un procédé de raccordement d'un échangeur thermique à un circuit de d'échange thermique externe au moyen d'un embout de raccordement. Ce moyen de raccordement, outre sa configuration spécifique, peut être soudé ou collé sur une plaque de l'échangeur thermique. Le document US2021/270546 divulgue un dispositif selon le préambule de la revendication 1.

Toutefois les solutions proposées dans les documents précités ne sont pas satisfaisantes. En effet, les procédés considérés pour la fixation d'un embout de raccordement à un échangeur thermique restent compliqués à mettre en œuvre sans nécessairement répondre pleinement aux exigences de tenue en température, d'étanchéité ou encore de résistance mécanique.

Un but de la présente invention est donc de proposer un dispositif d'échange thermique pourvu d'un embout de raccordement dont la fixation est conforme aux exigences en termes de tenue en température, d'étanchéité ou encore de résistance mécanique.

Un autre but de la présente invention est également de proposer un procédé de raccordement fluidique d'un conduit, au moyen d'un embout de raccordement, simple à mettre en œuvre et conforme aux exigences en termes de tenue en température, d'étanchéité ou encore de résistance mécanique.

### BREVE DESCRIPTION DE L'INVENTION

Les buts de la présente invention sont, au moins en partie, atteints par un dispositif d'échange thermique selon la revendication 1.

Selon un mode de mise en œuvre, la substance adhésive lie mécaniquement, avantageusement chimiquement, et de manière étanche, la zone d'assemblage avec la zone de raccordement.

Selon un mode de mise en œuvre, l'embout comprend également une cale périphérique en projection par rapport à la zone de raccordement et qui circonscrit la zone de raccordement de manière à délimiter, avec la cale interne, le volume d'adhésion.

Selon un mode de mise en œuvre, un joint, avantageusement un joint torique ou un joint à lèvres, est disposé dans une rainure, ménagée sur la face de raccordement, et intercalée entre l'ouverture et la cale interne, ladite cale interne s'interposant entre la substance adhésive et la rainure, avantageusement le joint est dans un état comprimé dans une gamme de 10% à 35% par rapport à son volume à l'état libre.

Selon un mode de mise en œuvre, le rapport entre la surface de la zone de raccordement et la surface de l'orifice est ajusté de sorte que l'assemblage de la face de raccordement avec la zone d'assemblage présente une résistance à la traction supérieure à 1 MPa, avantageusement supérieure à 1,6 MPa, encore plus avantageusement supérieure à 4,3 MPa.

Selon un mode de mise en œuvre, le rapport entre la surface de la zone de raccordement et la surface de l'orifice est ajusté de sorte que l'assemblage de la face de raccordement avec la zone d assemblage présente une étanchéité lors de la circulation d'un fluide à une pression supérieure à 1 bar, avantageusement supérieure à 3 bar, encore plus avantageusement supérieure à 7 bar.

L'invention concerne également un véhicule automobile pourvu d'un bloc batterie couplé au dispositif d'échange thermique selon la présente invention, à des fins de régulation thermique du bloc batterie par ledit dispositif d'échange thermique.

L'invention concerne également un procédé de raccordement fluidique d'un conduit, selon la revendication 8.

Selon un mode de mise en œuvre, ledit procédé comprend une étape d) de traitement thermique destinée à réticuler la substance adhésive.

Selon un mode de mise en œuvre, l'étape c) est précédée d'une étape c0) qui comprend le positionnement d'un joint, notamment d'un joint torique ou d'un joint à lèvres, dans une rainure ménagée sur la face de raccordement, et intercalée entre l'ouverture et la zone de raccordement.

Selon un mode de mise en œuvre, l'étape c) d'assemblage comprend l'application d'un effort, dit effort d'assemblage, adapté pour maintenir le joint comprimé dans une gamme de 10% à 35 % jusqu'à ce qu'un niveau de réticulation prédéterminé de la substance adhésive soit atteint, la réticulation prédéterminée étant une réticulation permettant de maintenir la compression du joint à un niveau de compression compris entre 10% et 35% dès que l'effort d'assemblage n'est plus appliqué.

Selon un mode de mise en œuvre, le rapport entre la surface de la zone de raccordement et la surface de l'orifice est ajusté de sorte que l'assemblage de la face de raccordement avec la zone d'assemblage, à l'issue de l'étape d), présente une résistance à la traction supérieure à 1 MPa, avantageusement supérieure à 1,6 MPa, encore plus avantageusement supérieure à 4,3 MPa.

Selon un mode de mise en œuvre, le rapport entre la surface de la zone de raccordement et la surface de l'orifice est ajusté de sorte que l'assemblage de la face de raccordement avec la zone d'assemblage, à l'issue de l'étape d) présente une étanchéité lors de la circulation d'un fluide à une pression supérieure à 1 bar, avantageusement supérieure à 3 bar, encore plus avantageusement supérieure à 7 bar.

Selon un mode de mise en œuvre, la première étape de préparation comprend le retrait d'une couche d'oxyde d'aluminium natif susceptible d'être présente sur la zone d'assemblage, et l'ajustement de la rugosité de ladite zone d'assemblage dans une gamme de rugosité comprise entre 1,4 µm et 2,6 µm, avantageusement supérieures à 1,9 µm, la première étape mettant en œuvre un procédé LASER ou un procédé d'abrasion mécanique.

Selon un mode de mise en œuvre, la première étape de préparation comprend la formation d'une couche d'adhésion sur la zone d'assemblage, avantageusement la couche d'adhésion est formée selon au moins l'une des sous-étapes suivantes :
- une anodisation ou conversion chimique de la zone d'assemblage
- la formation d'une couche de Ti/Zr sur la zone d'assemblage.

Selon un mode de mise en œuvre, ledit procédé comprend une deuxième étape b0) préparation de surface de la face de raccordement et exécutée avant l'étape b), la deuxième étape b0) comprend un traitement plasma et/ou un traitement chimique et/ou un traitement laser adapté pour conférer à la face de raccordement une énergie de surface supérieure à 36 mN/m, avantageusement supérieure à 50 mN/m.

### Brève description des dessins

D'autres caractéristiques et avantages de l'invention ressortiront de la description détaillée qui va suivre en référence aux figures annexées sur lesquelles :
[Fig.1] La [Fig.1] est une représentation schématique d'une plaque d'échange thermique mise en œuvre dans le cadre du procédé de raccordement selon la présente invention ;
[Fig.2] La [Fig.2] est une représentation schématique d'un embout de raccordement susceptible d'être mis en œuvre dans le cadre du procédé de raccordement selon la présente invention, notamment, l'embout de raccordement est représenté selon un plan de coupe passant par l'axe XX' ;
[Fig.3] La [Fig.3] est un schéma de principe illustrant la formation d'une couche d'adhésion, notamment sur cette [Fig.3], la plaque d'échange thermique est représentée selon un plan de coupe perpendiculaire à la face d'assemblage et passant par l'orifice ;
[Fig.4] La [Fig.4] est une représentation schématique de l'exécution de l'étape b) correspondant au dépôt d'une substance adhésive sur une zone raccordement de l'embout de raccordement représenté à la [Fig.2], notamment, l'embout de raccordement est représenté selon un plan de coupe passant par l'axe XX' ;
[Fig.5] La [Fig.5] est une représentation schématique de l'exécution de l'étape c) correspondant à l'assemblage de la zone de raccordement avec la zone d'adhésion, notamment l'embout de raccordement et la plaque d'échange thermique sont représentés selon un plan de coupe passant par l'axe XX' ;
[Fig.6] La [Fig.6] est une représentation schématique relative à l'exécution d'une étape c0) sur un embout de raccordement pourvu d'une rainure destinée à loger un joint notamment l'embout de raccordement est représenté selon un plan de coupe passant par l'axe XX' ;
[Fig.7] La [Fig.7] est une représentation schématique de l'exécution de l'étape c) correspondant au dépôt d'une substance adhésive sur une zone raccordement de l'embout de raccordement représenté à la [Fig.6], notamment l'embout de raccordement et la plaque d'échange thermique sont représentés selon un plan de coupe passant par l'axe XX'.

### DESCRIPTION DETAILLEE DE L'INVENTION

La présente invention concerne un dispositif d'échange thermique. Plus particulièrement, le dispositif d'échange thermique comprend un organe principal pourvu d'une face d'assemblage essentiellement plane, comprenant de l'aluminium, et ménageant un canal de circulation fluidique débouchant par un orifice disposé sur la face d'assemblage dudit organe principal.

Le dispositif d'échange thermique comprend également un embout de raccordement comprenant une embase de raccordement, plane.

Notamment, l'embase de raccordement comprend une face, dite face de raccordement, par laquelle débouche une ouverture d'un canal de raccordement.

L'embase de raccordement est, à cet égard, assemblée avec l'organe principal, au moyen d'une substance adhésive liant une zone d'assemblage de la face d'assemblage, périphérique à l'orifice, avec une zone de raccordement de la face de raccordement et périphérique à l'ouverture, l'ouverture et l'orifice étant en correspondance l'un de l'autre.

Selon la présente invention, la substance adhésive comprend soit une colle époxy soit une colle polyuréthane soit une colle acrylique soit une colle hybride, la colle hydride comprenant au moins deux fonctions chimiques choisies parmi la fonction époxy, la fonction cyanoacrylate, la fonction acrylique, la fonction polyuréthane.

L'organe principal peut comprendre une plaque d'échange thermique, une poutre, ou encore un diffuseur. La suite de la description sera limitée à la seule considération d'une plaque d'échange thermique. Toutefois, l'homme du métier pourra adapter les principes décrits ci-après à d'autres éléments tels qu'une poutre ou un diffuseur.

L'invention concerne également un procédé de raccordement fluidique d'un conduit, au moyen d'un embout de raccordement, avec un organe principal. L'organe principal est notamment pourvu d'une face d'assemblage essentiellement plane, et comprend de l'aluminium.

L'organe principal est, par ailleurs, pourvu d'un canal de circulation fluidique débouchant par un orifice disposé sur la face d'assemblage. L'embout de raccordement comprend une embase, dite embase de raccordement, plane. L'embase de raccordement comprend une face, dite face de raccordement, par laquelle débouche une ouverture d'un canal, dit canal de raccordement, dudit embout de raccordement.

Le procédé, selon la présente invention, comprend l'exécution des étapes suivantes :
a) une première étape de préparation de surface d'une zone d'assemblage périphérique à l'orifice, la première étape comprenant un traitement laser et/ou un traitement par abrasion et/ou un traitement chimique ;
b) une étape de dépôt d'une substance adhésive sur l'une et/ou l'autre de la zone d'assemblage et d'une zone de raccordement de la face de raccordement et périphérique à l'ouverture, la substance adhésive comprenant soit une colle époxy soit une colle polyuréthane soit une colle acrylique soit une colle hybride, la colle hydride comprenant au moins deux fonctions chimiques parmi la fonction époxy, la fonction cyanoacrylate, la fonction acrylique, la fonction polyuréthane ;
c) une étape d'assemblage de la zone d'assemblage et de la face de raccordement.

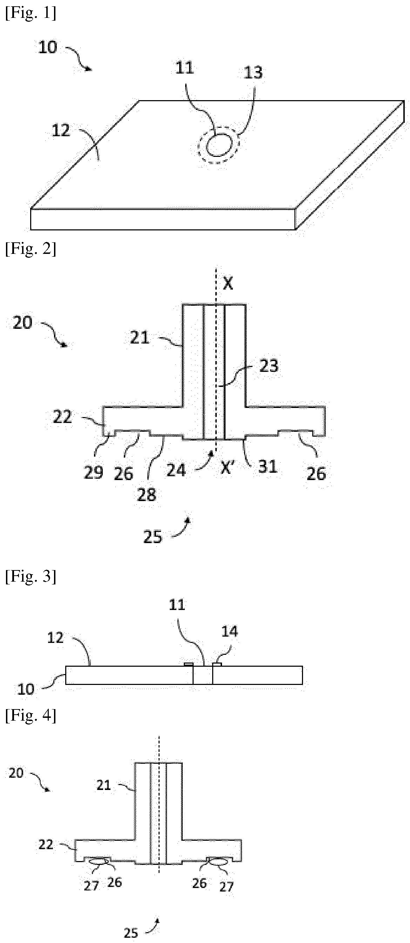

A la [Fig.1], on peut voir une représentation partielle d'une plaque d'échange thermique 10. La plaque d'échange thermique 10 comprend de l'aluminium.

La plaque d'échange thermique 10 est notamment une plaque d'un échangeur thermique, et qui définit un canal de circulation fluidique débouchant par un orifice 11 au niveau d'une face d'assemblage 12 de la plaque d'échange thermique 10.

A la [Fig.2], on peut voir une représentation schématique d'un embout de raccordement 20 destiné à être fixé à la plaque d'échange thermique.

Notamment, l'embout de raccordement 20 comprend un corps principal 21 de forme généralement cylindrique et terminé par une de ses extrémités par une embase, dite embase de raccordement 22. L'embout de raccordement 20 comprend un canal, dit canal de raccordement 23, qui s'étend selon une direction définie par un axe de révolution XX' du corps principal 21, et qui débouche par une ouverture 24 disposée sur une face, dit face de raccordement 25 de l'embase de raccordement 23.

Le procédé selon la présente invention comprend une première étape a) de préparation de surface d'une zone d'assemblage 13 périphérique à l'orifice 11.

L'étendue et/ou les caractéristiques de la zone d'assemblage 13 feront l'objet d'une discussion dans la suite de l'énoncé de la présente invention.

Selon la présente invention, la première étape a) de préparation de surface peut être exécutée au moyen d'un traitement laser et/ou d'un traitement par abrasion et/ou d'un traitement chimique et/ou une conversion chimique.

Il est entendu qu'un traitement de surface permet de décontaminer la zone d'assemblage 13 pour lui conférer une énergie de surface et/ou un état chimique particulier, et notamment compatible avec la mise en œuvre d'une substance adhésive qui sera décrite dans la suite de l'exposé de la présente invention.

La couche d'aluminium d'oxyde natif reste incontrôlable. Elle peut notamment présenter une adhésion limitée et par voie de conséquence former une zone de fragilité. Ainsi, selon un mode de mise en œuvre particulier, la première étape a) peut être exécutée pour retirer une couche d'oxyde d'aluminium natif susceptible d'être présente dans la zone d'assemblage. Il est entendu que le retrait de la couche d'oxyde d'aluminium lors de l'exécution de la première étape n'est effectif que dans la zone d'assemblage.

De manière particulièrement avantageuse, la considération d'un procédé LASER permet de faire croître, lors du retrait de la couche d'oxyde d'aluminium natif, une nouvelle couche d'oxyde d'aluminium d'une épaisseur et d'une texture contrôlée. A cet égard, le procédé LASER peut comprendre une illumination avec un rayonnement LASER d'une longueur d'onde 1 comprise entre 900 nm et 1550 nm, par exemple égale à 1064 nm, et d'une fluence comprise entre 5 J/cm² 134 J/cm², avantageusement comprise entre 5 J/cm² et 15 J/cm². Le LASER mis en œuvre peut être un LASER à impulsions ou un LASER continu.

Toujours selon ce mode de mise en œuvre, la première étape a) peut être exécutée pour ajuster la rugosité de la zone d'assemblage dans une gamme de rugosités Ra comprises entre 1,4 µm et 2,6 µm, avantageusement supérieures à 1,9 µm. Cette rugosité est avantageusement mesurée au moyen de rugosimètre à pointe, par exemple Rugosimètre Marsurf PS10 avec palpeur PHT 6-350 et équipé d'une pointe de 2 µm. Les paramètres de mesure sont les suivants :
- Vitesse de mesure : 1,0 mm/s
- Longueur de mesure : 10 mm
- Force de mesure : 0,75 mN
- Norme suivie : DIN EN ISO 4287

Selon un autre mode de mise en œuvre illustré à la [Fig.3], la première étape a) de préparation peut également comprendre la formation d'une couche d'adhésion 14 sur la zone d'assemblage. Il est entendu que la formation de la couche d'adhésion peut être limitée à la seule zone d'assemblage 11.

Selon une première alternative, la couche d'adhésion 14 est formée par exécution d'une anodisation, par exemple sélective, de la zone d'assemblage. Selon une autre alternative, la couche d'adhésion peut comprendre la formation d'une couche de Ti/Zr sur la zone d'assemblage 11. Toujours à titre d'alternative, le traitement chimique peut comprendre un traitement de conversion chimique.

Le procédé de raccordement selon la présente invention comprend également une étape b) de dépôt d'une substance adhésive sur l'une et/ou l'autre de la zone d'assemblage 13 et d'une zone de raccordement 26 de la face de raccordement 25 et périphérique à l'ouverture 24.

La substance adhésive comprend soit une colle époxy soit une colle polyuréthane soit une colle acrylique soit une colle hybride, la colle hydride comprenant au moins deux fonctions chimiques parmi la fonction époxy, la fonction cyanoacrylate, la fonction acrylique, la fonction polyuréthane.

La [Fig.4] illustre, à cet égard, le dépôt de la substance adhésive 27 sur la zone de raccordement 26.

De manière particulièrement avantageuse, la zone de raccordement 26 peut être délimitée intérieurement par une cale interne 28. Notamment, la cale interne 28 est en projection par rapport à la zone de raccordement 27 et est circonscrite par ladite zone de raccordement. par exemple la cale interne est de forme annulaire ou oblongue.

Toujours de manière avantageuse, la zone de raccordement 26 peut également être délimitée extérieurement par une cale périphérique 29 en projection par rapport à la zone de raccordement 26 et qui circonscrit la zone de raccordement 26.

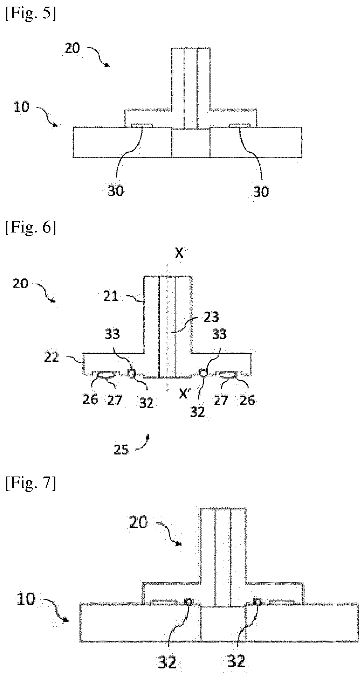

La [Fig.5] est une représentation schématique d'une étape c) d'assemblage de la zone d'assemblage et de la zone de raccordement.

Lors de cette étape c) d'assemblage, l'ouverture 24 et l'orifice 11 sont en correspondance l'un de l'autre, et la substance adhésive 27 s'étale de manière à remplir un espace ménagé entre la zone d'assemblage 13 et la zone de raccordement 26. La mise en œuvre de la substance adhésive 28 permet ainsi de lier mécaniquement, avantageusement chimiquement, et de manière étanche, la zone d'assemblage 13 avec la zone de raccordement 26.

Par « étanche », on entend étanche à un liquide de refroidissement, et notamment à un liquide susceptible de comprendre du glycol.

A cet égard, la mise en œuvre de la cale interne 28 et de la cale périphérique 29 permet également de définir un volume, dit volume d'adhésion 30 ([Fig.5]), entre la zone de raccordement 26 et la zone d'assemblage 13 et dans lequel la substance adhésive 27 est destinée à être logée. En d'autres termes, la cale interne 28 et la cale périphérique 29 permettent de limiter le volume dans lequel la substance adhésive peut se répandre lors de l'exécution de l'une et l'autres des étapes b) et c). Notamment, la cale interne 28 et la cale périphérique 29 limitent les débordements de substance adhésive 27 susceptible d'intervenir lors de l'exécution de l'étape c).

En outre, la cale interne 28 permet d'isoler l'ouverture du volume d'adhésion et, par voie de conséquence, de la substance adhésive 27.

Par surcroit, il est entendu que la cale interne 28 et la cale périphérique 29 sont en appui contre la face d'assemblage 12 à l'issue de l'étape c).

Selon un mode de réalisation particulièrement avantageux, il est possible de ne considérer que la cale interne 28 (dispositif dépourvu de cale périphérique 29). Cette dernière configuration ménage ainsi une voie d'écoulement (et/ou de fluage) de la substance adhésive autre que vers l'ouverture 24.

Selon un autre mode de réalisation particulièrement avantageux, il est possible de considérer une cale périphérique 29 discontinue (ouverte, par exemple en forme de créneau) de manière à ménager ainsi une voie d'écoulement (et/ou de fluage) de la substance adhésive autre que vers l'ouverture 24.

Selon un mode de réalisation particulièrement avantageux, la substance adhésive peut comprendre des billes, par exemple des billes de verres, dont les dimensions (il est entendu qu'il est question de dimensions moyennes) sont adaptées pour imposer une distance prédéterminée entre la zone de raccordement 26 et la zone d'assemblage 13. Il est entendu que si les billes considérées devaient être sphériques, les dimensions seraient égales au diamètre desdites billes. Ce mode de réalisation particulier peut être considéré seul ou en combinaison avec l'une et/ou l'autre de la cale interne et de la cale périphérique.

Par ailleurs, l'embout de raccordement 20 peut comprendre, dans le prolongement du corps principal 21 et en projection par rapport à la face de raccordement 25, des moyens de guidage dudit embout de raccordement 20. Plus particulièrement, les moyens de guidage sont configurés pour permettre la mise en correspondance de l'ouverture 24 et de l'orifice 11. Les moyens de guidage peuvent comprendre une cale, dite cale de guidage 31, périphérique à l'ouverture et destinée à être insérée dans l'orifice 11. A cet égard, la cale de guidage 31 peut présenter un forme conforme à l'orifice 11 et/ou tronconique.

De manière optionnelle, il est également possible de considérer l'exécution, après l'étape c), d'une étape d) de traitement thermique destinée à accélérer la réticulation de la substance adhésive. Les détails relatifs à l'étape d), et notamment le cycle thermique considéré, sont fonction de la substance adhésive considérée.

Le traitement thermique considéré pour l'exécution de l'étape d) peut comprendre une étape de chauffage localisé. Notamment, le traitement thermique peut comprendre un chauffage par induction, et plus particulièrement un chauffage par induction de la plaque d'échange thermique 10 fait, par exemple, d'aluminium. Le chauffage par induction permet, à cet égard, d'accélérer le processus de réticulation de la substance adhésive. Notamment, le chauffage par induction peut être adapté pour accélérer suffisamment la réticulation sur une durée inférieure à 2 minutes, avantageusement inférieure à 1 min 30 secondes. Par exemple, un cycle de réticulation pourra comprendre un temps de chauffe suivi d'un temps de refroidissement. Notamment, le temps de chauffe peut être inférieur à 1 min 30 seconde, avantageusement inférieur à 1 min. Ce dernier aspect permet d'envisager un contrôle en ligne de l'étanchéité de l'assemblage, par exemple une étanchéité à une pression de 3 bar.

De manière alternative ou complémentaire, tant l'embout de raccordement 20 que la plaque d'échange thermique 10 peuvent être préchauffés avant d'exécuter l'étape c). Ce dernier aspect permet notamment de pallier d'éventuelles différences de dilatations thermiques susceptibles d'intervenir lors de l'exécution de l'étape d). Ce préchauffage permet également de maintenir la précision d'alignement entre l'embout de raccordement 20 et la plaque d'échange thermique.

De manière avantageuse, le rapport entre la surface de la zone de raccordement et la surface de l'orifice est ajusté de sorte que l'assemblage de la face de raccordement avec la zone d'assemblage, à l'issue de l'étape d), présente une résistance à la traction supérieure à 1 MPa, avantageusement supérieure à 1,6 MPa, encore plus avantageusement supérieure à 4,3 MPa.

Toujours de manière avantageuse, le rapport entre la surface de la zone de raccordement et la surface de l'orifice est ajusté de sorte que l'assemblage de la face de raccordement avec la zone d'assemblage, à l'issue de l'étape d) présente une étanchéité lors de la circulation d'un fluide à une pression supérieure à 1 bar, avantageusement supérieure à 3 bar, encore plus avantageusement supérieure à 7 bar, par exemple supérieure à 9 bar, toujours par exemple supérieure à 11 bar.

Le procédé selon la présente invention peut également comprendre la mise en œuvre d'une deuxième étape b0) de préparation de surface de la face de raccordement et exécutée avant l'étape b). La deuxième étape b0) comprend un traitement plasma et/ou un traitement chimique et/ou un traitement laser adapté pour conférer à la zone raccordement une énergie de surface supérieure à 36 mN/m, avantageusement supérieure à 50 mN/m. Ce dernier aspect permet ainsi d'assurer une meilleure mouillabilité de la zone de raccordement par la substance adhésive.

L'énergie de surface peut être mesurée avec un goniomètre (par exemple Mobile Surface Analyzer (MSA) de Krüss). La méthode employée met en œuvre une double goutte posée, et notamment la mesure de l'angle de contact de deux gouttes de liquides différents (eau et diiodo-méthane), suivie d'un calcul de l'énergie de surface du solide.

Selon un mode de réalisation particulièrement avantageux et qui reprend pour l'essentiel les caractéristiques décrites précédemment, le procédé selon la présente invention peut comprendre l'exécution d'une étape c0). Notamment, cette étape c0), est exécutée avant l'étape c). Telle qu'illustrée à la [Fig.6], l'étape c0) comprend le positionnement d'un joint 32 (par exemple un joint torique ou un joint à lèvres), dans une rainure 33 ménagée sur la face de raccordement, et intercalée entre l'ouverture et la zone de raccordement. Le joint 32 comprend avantageusement au moins un des matériaux choisi parmi : EPDM, NBR, HNBR, FKM, AEM, FVMQ, Silicone. Avantageusement, la deuxième étape de traitement n'est pas appliquée à la rainure.

La [Fig.7] est une représentation schématique d'une étape c) d'assemblage de la zone d'assemblage et de la zone de raccordement dès lors que la mise en place du joint 32 est considérée. Notamment, l'étape c) d'assemblage comprend l'application d'un effort, dit effort d'assemblage, adapté pour maintenir le joint comprimé dans une gamme de 10% à 35 % jusqu'à ce qu'un niveau de réticulation prédéterminé de la substance adhésive soit atteint, la réticulation prédéterminée étant une réticulation permettant de maintenir la compression du joint à un niveau de compression compris entre 10% et 35% dès que l'effort d'assemblage n'est plus appliqué.

Le degré de réticulation d'une colle est fonction de sa chimie et de son histoire thermique. L'homme du métier, sur la base de ses connaissances générales et de la chimie considérée, pourra établir les meilleures conditions qui soient pour atteindre un degré de réticulation donné.

Il est entendu que le dispositif ainsi obtenu peut être dépourvu du joint 32. En effet, la substance adhésive 27 a certes pour fonction d'assurer un assemblage des différents éléments, mais également, dépendamment de ses propriétés chimiques et/ou physiques, de rendre l'assemblage étanche selon les spécifications définies dans le présent énoncé.

L'invention concerne également un dispositif d'échange thermique qui reprend pour l'essentiel les caractéristiques décrites précédemment.

L'invention concerne également un véhicule automobile pourvu d'un bloc batterie couplé au dispositif d'échange thermique selon la présente invention, à des fins de régulation en température du bloc batterie par ledit dispositif d'échange thermique.

Bien sûr, l'invention n'est pas limitée aux modes de réalisation décrits et on peut y apporter des variantes de réalisation sans sortir du cadre de l'invention tel que défini par les revendications.

## Revendications

1. Dispositif d'échange thermique qui comprend :
- un organe principal (10) pourvu d'une face d'assemblage (12) essentiellement plane, comprenant de l'aluminium, et ménageant un canal de circulation fluidique débouchant par un orifice (11) disposé sur la face d'assemblage (12) dudit organe principal (10) ;
- un embout de raccordement (20) comprenant une embase de raccordement (22), plane, l'embase de raccordement (22) comprenant une face, dite face de raccordement (25), par laquelle débouche une ouverture (24) d'un canal de raccordement (23), l'embase de raccordement (22) étant assemblée avec l'organe principal (10), au moyen d'une substance adhésive (27) liant une zone d'assemblage (13) de la face d'assemblage (12), périphérique à l'orifice (11), avec une zone de raccordement (26) de la face de raccordement (25) et périphérique à l'ouverture (24), l'ouverture (24) et l'orifice (11) étant en correspondance l'un de l'autre, la substance adhésive (27) comprenant soit une colle époxy soit une colle polyuréthane soit une colle acrylique soit une colle hybride, la colle hydride comprenant au moins deux fonctions chimiques choisies parmi la fonction époxy, la fonction cyanoacrylate, la fonction acrylique, la fonction polyuréthane,
le dispositif étant **caractérisé en ce que** l'embout de raccordement comprend une cale interne (28), avantageusement de forme annulaire ou oblongue, en projection par rapport à la zone de raccordement (26) et circonscrite par ladite zone de raccordement (26), la cale interne (28) étant configurée pour définir un volume, dit volume d'adhésion (30), entre la zone de raccordement (26) et la zone d'assemblage (13) et dans lequel est logée la substance adhésive (27).

2. Dispositif d'échange thermique selon la revendication 1, dans lequel la substance adhésive (27) lie mécaniquement, avantageusement chimiquement, et de manière étanche, la zone d'assemblage (13) avec la zone de raccordement (26).

3. Dispositif d'échange thermique selon la revendication 1 ou 2, dans lequel l'embout comprend également une cale périphérique (29) en projection par rapport à la zone de raccordement (26) et qui circonscrit la zone de raccordement (26) de manière à délimiter, avec la cale interne (28), le volume d'adhésion (30).

4. Dispositif d'échange thermique selon l'une des revendications 1 à 3, dans lequel un joint (32), avantageusement un joint torique ou un joint à lèvres en EPDM ou en silicon, est disposé dans une rainure (33), ménagée sur la face de raccordement (25), et intercalée entre l'ouverture (24) et la cale interne (28), ladite cale interne (28) s'interposant entre la substance adhésive (27) et la rainure (33), avantageusement le joint (32) est dans un état comprimé dans une gamme de 10% à 35% par rapport à son volume à l'état libre.

5. Dispositif d'échange thermique selon l'une des revendications 1 à 4, dans lequel le rapport entre la surface de la zone de raccordement (26) et la surface de l'orifice (11) est ajusté de sorte que l'assemblage de la face de raccordement (25) avec la zone d'assemblage (13) présente une résistance à la traction supérieure à 1 MPa, avantageusement supérieure à 1,6 MPa, encore plus avantageusement supérieure à 4,3 MPa.

6. Dispositif d'échange thermique selon l'une des revendications 1 à 4, dans lequel le rapport entre la surface de la zone de raccordement (26) et la surface de l'orifice (11) est ajusté de sorte que l'assemblage de la face de raccordement (25) avec la zone d'assemblage (13), présente une étanchéité lors de la circulation d'un fluide à une pression supérieure à 1 bar, avantageusement supérieure à 3 bar, encore plus avantageusement supérieure à 7 bar.

7. Véhicule automobile pourvu d'un bloc batterie couplé au dispositif d'échange thermique selon l'une des revendications 1 à 6, à des fins de régulation thermique du bloc batterie par ledit dispositif d'échange thermique.

8. Procédé de raccordement fluidique d'un conduit, au moyen d'un embout de raccordement (20), avec un organe principal (10) pourvu d'une face d'assemblage (12) essentiellement plane, comprenant de l'aluminium, ledit organe principal (10), étant pourvu d'un canal de circulation fluidique débouchant par un orifice (11) disposé sur la face d'assemblage (12), l'embout de raccordement (20) comprenant une embase, dite embase de raccordement (22), plane, l'embase de raccordement (22) comprenant une face, dite face de raccordement (25), par laquelle débouche une ouverture (24) d'un canal, dit canal de raccordement (23), dudit embout de raccordement (20), le procédé comprenant l'exécution des étapes suivantes :
a) une première étape de préparation de surface d'une zone d'assemblage (13) périphérique à l'orifice (11), la première étape comprenant un traitement laser et/ou un traitement par abrasion et/ou un traitement chimique avantageusement électrochimique ;
b) une étape de dépôt d'une substance adhésive (27) sur l'une et/ou l'autre de la zone d'assemblage (13) et d'une zone de raccordement (26) de la face de raccordement (25) et périphérique à l'ouverture (24), la substance adhésive (27) comprenant soit une colle époxy soit une colle polyuréthane soit une colle acrylique soit une colle hybride, la colle hydride comprenant au moins deux fonctions chimiques parmi la fonction époxy, la fonction cyanoacrylate, la fonction acrylique, la fonction polyuréthane ;
c) une étape d'assemblage de la zone d'assemblage (13) et de la face de raccordement (25) le procédé étant **caractérisé en ce que** l'embout de raccordement comprenant une cale interne (28), avantageusement de forme annulaire ou oblongue, en projection par rapport à la zone de raccordement (26) et circonscrite par ladite zone de raccordement (26), la cale interne (28) étant configurée pour définir un volume, dit volume d'adhésion (30), entre la zone de raccordement (26) et la zone d'assemblage (13) et dans lequel la substance adhésive (27) déposée lors de l'exécution de l'étape b) est logée.

9. Procédé de raccordement fluidique selon la revendication 8, dans lequel ledit procédé comprend une étape d) de traitement thermique destinée à réticuler la substance adhésive (27).

10. Procédé de raccordement fluidique selon la revendication 8 ou 9, dans lequel l'étape c) est précédée d'une étape c0) qui comprend le positionnement d'un joint (32), notamment d'un joint torique ou un joint à lèvres, dans une rainure (33) ménagée sur la face de raccordement (25), et intercalée entre l'ouverture (24) et la zone de raccordement (26).

11. Procédé de raccordement fluidique selon la revendication 10, dans lequel l'étape c) d'assemblage comprend l'application d'un effort, dit effort d'assemblage, adapté pour maintenir le joint (32) comprimé dans une gamme de 10% à 35 % jusqu'à ce qu'un niveau de réticulation prédéterminé de la substance adhésive (27) soit atteint, la réticulation prédéterminée étant une réticulation permettant de maintenir la compression du joint (32) à un niveau de compression compris entre 10% et 35% dès que l'effort d'assemblage n'est plus appliqué.

12. Procédé de raccordement fluidique selon l'une des revendication 8 à 11, dans lequel le rapport entre la surface de la zone de raccordement (26) et la surface de l'orifice (11) est ajusté de sorte que l'assemblage de la face de raccordement (25) avec la zone d'assemblage (13), à l'issue de l'étape d), présente une résistance à la traction supérieure à 1 MPa, avantageusement supérieure à 1,6 MPa, encore plus avantageusement supérieure à 4,3 MPa.

13. Procédé de raccordement fluidique selon l'une des revendications 8 à 11, dans lequel le rapport entre la surface de la zone de raccordement (26) et la surface de l'orifice (11) est ajusté de sorte que l'assemblage de la face de raccordement (25) avec la zone d'assemblage (13), à l'issue de l'étape d) présente une étanchéité lors de la circulation d'un fluide à une pression supérieure à 1 bar, avantageusement supérieure à 3 bar, encore plus avantageusement supérieure à 7 bar.

14. Procédé de raccordement fluidique selon l'une des revendications 8 à 13, dans lequel la première étape de préparation comprend le retrait d'une couche d'oxyde d'aluminium natif susceptible d'être présente sur la zone d'assemblage (13), et l'ajustement de la rugosité de ladite zone d'assemblage (13) dans une gamme de rugosité comprise entre 1,4 µm et 2,6 µm, avantageusement supérieures à 1,9 µm, la première étape mettant en œuvre un procédé LASER ou un procédé d'abrasion mécanique.

15. Procédé de raccordement fluidique selon l'une des revendications 8 à 13, dans lequel la première étape de préparation comprend la formation d'une couche d'adhésion (14) sur la zone d'assemblage (13), avantageusement la couche d'adhésion (14) est formée selon au moins l'une des sous-étapes suivantes :
- une anodisation ou un traitement de conversion chimique de la zone d'assemblage (13)
- la formation d'une couche de Ti/Zr sur la zone d'assemblage (13).

16. Procédé de raccordement fluidique selon l'une des revendications 8 à 15, dans lequel ledit procédé comprend une deuxième étape b0) préparation de surface de la face de raccordement (25) et exécutée avant l'étape b), la deuxième étape b0) comprend un traitement plasma et/ou un traitement chimique et/ou un traitement laser adapté pour conférer à la face de raccordement (25) une énergie de surface supérieure à 36 mN/m, avantageusement supérieure à 50 mN/m.

## Patentansprüche

1. Wärmetauschervorrichtung, die umfasst:
- ein Hauptelement (10), das mit einer im Wesentlichen ebenen Fügefläche (12) versehen ist, Aluminium umfasst und einen Fluidströmungskanal aufweist, der durch eine Blende (11) mündet, die an der Fügefläche (12) des Hauptelements (10) angeordnet ist;
- ein Verbindungsstück (20), umfassend eine ebene Verbindungsbasis (22), wobei die Verbindungsbasis (22) eine Fläche, die sogenannte Verbindungsfläche (25) umfasst, durch die eine Öffnung (24) eines Verbindungskanals (23) mündet, wobei die Verbindungsbasis (22) mittels eines Klebstoffs (27) mit dem Hauptelement (10) verbunden ist, der einen Fügebereich (13) der Fügefläche (12) um die Blende (11) herum, mit einem Verbindungsbereich (26) der Verbindungsfläche (25) um die Öffnung (24) herum verbindet, wobei die Öffnung (24) und die Blende (11) miteinander fluchten, wobei der Klebstoff (27) entweder einen Epoxidkleber, einen Polyurethankleber, einen Acrylkleber oder einen Hybridkleber umfasst, wobei der Hybridkleber mindestens zwei chemische Funktionen umfasst, die ausgewählt sind aus der Epoxidfunktion, der Cyanacrylatfunktion, der Acrylfunktion, der Polyurethanfunktion,
wobei die Vorrichtung **dadurch gekennzeichnet ist, dass** das Verbindungsstück einen inneren Absatz (28) umfasst, der vorteilhafterweise ringförmig oder länglich ist, gegenüber dem Verbindungsbereich (26) hervorsteht und von diesem Verbindungsbereich (26) umschlossen wird, wobei der innere Absatz (28) so ausgebildet ist, dass er ein Volumen, das sogenannte Klebevolumen (30), zwischen dem Verbindungsbereich (26) und dem Fügebereich (13) bildet, in dem der Klebstoff (27) untergebracht ist.

2. Wärmetauschervorrichtung nach Anspruch 1, wobei der Klebstoff (27) den Fügebereich (13) mechanisch, vorteilhafterweise chemisch und dicht mit dem Verbindungsbereich (26) verbindet.

3. Wärmetauschervorrichtung nach Anspruch 1 oder 2, wobei das Verbindungsstück außerdem einen umlaufenden Anschlag (29) aufweist, der gegenüber dem Verbindungsbereich (26) vorsteht und den Verbindungsbereich (26) so umschließt, dass er zusammen mit dem inneren Absatz (28) das Klebevolumen (30) begrenzt.

4. Wärmetauschervorrichtung nach einem der Ansprüche 1 bis 3, wobei eine Dichtung (32), vorteilhafterweise ein O-Ring oder eine Lippendichtung aus EPDM oder Silikon, in einer Nut (33) angeordnet ist, die an der Verbindungsfläche (25) ausgebildet ist, und zwischen der Öffnung (24) und dem inneren Absatz (28) eingefügt ist, wobei sich der innere Absatz (28) zwischen dem Klebstoff (27) und der Nut (33) befindet, wobei die Dichtung (32) vorteilhafterweise in einem komprimierten Zustand im Bereich von 10 % bis 35 % ihres Volumens im freien Zustand vorliegt.

5. Wärmetauschervorrichtung nach einem der Ansprüche 1 bis 4, wobei das Verhältnis zwischen der Fläche des Verbindungsbereichs (26) und der Fläche der Blende (11) so eingestellt ist, dass die Verbindung der Verbindungsfläche (25) mit dem Fügebereich (13) eine Zugfestigkeit von mehr als 1 MPa, vorteilhafterweise mehr als 1,6 MPa, noch vorteilhafterweise mehr als 4,3 MPa aufweist.

6. Wärmetauschervorrichtung nach einem der Ansprüche 1 bis 4, wobei das Verhältnis zwischen der Fläche des Verbindungsbereichs (26) und der Fläche der Blende (11) so eingestellt ist, dass die Verbindung der Verbindungsfläche (25) mit dem Fügebereich (13) bei Durchströmung eines Fluids mit einem Druck von mehr als 1 bar, vorteilhafterweise mehr als 3 bar, noch vorteilhafterweise mehr als 7 bar, dicht ist.

7. Kraftfahrzeug, das mit einem an die Wärmeaustauschvorrichtung angeschlossenen Batterieblock nach einem der Ansprüche 1 bis 6 versehen ist, um den Batterieblock mittels dieser Wärmeaustauschvorrichtung thermisch zu regulieren.

8. Verfahren zur fluidischen Verbindung einer Leitung mittels eines Verbindungsstücks (20) an ein Hauptelement (10), das mit einer im Wesentlichen ebenen Fügefläche (12) versehen ist und Aluminium umfasst, wobei das Hauptelement (10) mit einem Fluidströmungskanal versehen ist, der durch eine an der Fügefläche (12) angeordnete Blende (11) mündet, wobei das Verbindungsstück (20) eine ebene Basis, die sogenannte Verbindungsbasis (22), umfasst, wobei die Verbindungsbasis (22) eine Fläche, die sogenannte Verbindungsfläche (25), umfasst, durch die eine Öffnung (24) eines Kanals, der sogenannte Verbindungskanal (23), des genannten Verbindungsstücks (20) mündet, wobei das Verfahren die Durchführung der folgenden Schritte umfasst:
a) einen ersten Schritt zur Oberflächenvorbereitung eines Fügebereichs (13), der um die Blende (11) herum verläuft, wobei der erste Schritt eine Laserbehandlung und/oder eine Abrasionsbehandlung und/oder eine chemische, vorteilhafterweise elektrochemische Behandlung umfasst;
b) einen Schritt zum Aufbringen eines Klebstoffs (27) auf den Fügebereich (13) und/oder einen Verbindungsbereich (26) der Verbindungsfläche (25), der um die Öffnung (24) herum verläuft, wobei der Klebstoff (27) entweder einen Epoxidkleber, einen Polyurethankleber, einen Acrylkleber oder einen Hybridkleber umfasst, wobei der Hybridkleber mindestens zwei chemische Funktionen aus der Gruppe der Epoxidfunktion, der Cyanacrylatfunktion, der Acrylfunktion und der Polyurethanfunktion umfasst;
c) einen Schritt zum Fügen des Fügebereichs (13) und der Verbindungsfläche (25)
wobei das Verfahren **dadurch gekennzeichnet ist, dass** das Verbindungsstück einen inneren Absatz (28) umfasst, der vorteilhafterweise ringförmig oder länglich ist, gegenüber dem Verbindungsbereich (26) hervorsteht und von diesem Verbindungsbereich (26) umschlossen wird, wobei der innere Absatz (28) so ausgebildet ist, dass er ein Volumen, das sogenannte Klebevolumen (30), zwischen dem Verbindungsbereich (26) und dem Fügebereich (13) bildet, in dem der bei der Durchführung des Schritts b) aufgetragene Klebstoff (27) untergebracht wird.

9. Verfahren zur fluidischen Verbindung nach Anspruch 8, wobei das Verfahren einen Schritt d) der Wärmebehandlung zum Vernetzen des Klebstoffs (27) umfasst.

10. Verfahren zur fluidischen Verbindung nach Anspruch 8 oder 9, wobei dem Schritt c) ein Schritt c0) vorausgeht, der das Anbringen einer Dichtung (32), insbesondere eines O-Rings oder einer Lippendichtung, in einer an der Verbindungsfläche (25) ausgebildeten Nut (33) umfasst, und die zwischen der Öffnung (24) und dem Verbindungsbereich (26) eingefügt ist.

11. Verfahren zur fluidischen Verbindung nach Anspruch 10, wobei der Fügeschritt c) das Aufbringen einer Kraft, der sogenannten Fügekraft, umfasst, die geeignet ist, die Dichtung (32) in einem Bereich von 10 % bis 35 % zusammengedrückt zu halten, bis ein vorbestimmter Vernetzungsgrad des Klebstoffs (27) erreicht ist, wobei die vorbestimmte Vernetzung eine Vernetzung ist, die es ermöglicht, die Kompression der Dichtung (32) auf einem Kompressionsgrad zwischen 10 % und 35 % aufrechtzuerhalten, sobald die Fügekraft nicht mehr ausgeübt wird.

12. Verfahren zur fluidischen Verbindung nach einem der Ansprüche 8 bis 11, bei dem das Verhältnis zwischen der Fläche des Verbindungsbereichs (26) und der Fläche der Blende (11) so eingestellt wird, dass die Verbindung der Verbindungsfläche (25) mit dem Fügebereich (13), nach Abschluss des Schritts d) eine Zugfestigkeit von mehr als 1 MPa, vorteilhafterweise mehr als 1,6 MPa, noch vorteilhafter mehr als 4,3 MPa aufweist.

13. Verfahren zur fluidischen Verbindung nach einem der Ansprüche 8 bis 11, wobei das Verhältnis zwischen der Fläche des Verbindungsbereichs (26) und der Fläche der Blende (11) so eingestellt wird, dass die Verbindung der Verbindungsfläche (25) mit dem Fügebereich (13), nach Abschluss des Schritts d) bei Durchströmung eines Fluids mit einem Druck von mehr als 1 bar, vorteilhafterweise mehr als 3 bar, noch vorteilhafterweise mehr als 7 bar, dicht ist.

14. Verfahren zur fluidischen Verbindung nach einem der Ansprüche 8 bis 13, wobei der erste Vorbereitungsschritt das Entfernen einer Schicht aus nativem Aluminiumoxid umfasst, die auf dem Fügebereich (13) vorhanden sein kann, und die Anpassung der Rauheit des genannten Fügebereichs (13) auf einen Rauheitsbereich zwischen 1,4 µm und 2,6 µm, vorteilhafterweise über 1,9 µm, wobei der erste Schritt ein LASER-Verfahren oder ein mechanisches Abrasionsverfahren implementiert.

15. Verfahren zur fluidischen Verbindung nach einem der Ansprüche 8 bis 13, wobei der erste Vorbereitungsschritt das Aufbringen einer Klebeschicht (14) auf den Fügebereich (13) umfasst, wobei die Klebeschicht (14) vorteilhafterweise gemäß mindestens einem der folgenden Teilschritte aufgebracht wird:
- eine Eloxierung oder eine chemische Konversionsbehandlung des Fügebereichs (13)
- die Bildung einer Ti/Zr-Schicht auf dem Fügebereich (13).

16. Verfahren zur fluidischen Verbindung nach einem der Ansprüche 8 bis 15, wobei das Verfahren einen zweiten Schritt b0) zur Oberflächenvorbereitung der Verbindungsfläche (25) umfasst, der vor dem Schritt b) durchgeführt wird, der zweite Schritt b0) eine Plasmabehandlung und/oder eine chemische Behandlung und/oder eine Laserbehandlung umfasst, die geeignet ist, der Verbindungsfläche (25) eine Oberflächenenergie von mehr als 36 mN/m, vorteilhafterweise mehr als 50 mN/m, zu verleihen.

## Claims

1. Heat exchange device which comprises:
- a main member (10) which is provided with a substantially planar assembly face (12), said member comprising aluminum and providing a fluid circulation channel which leads to a port (11) arranged on the assembly face (12) of said main member (10);
- a connection end piece (20) comprising a planar connection base (22), the connection base (22) comprising a face, referred to as the connection face (25), through which an opening (24) of a connection channel (23) extends, the connection base (22) being joined to the main member (10) by means of an adhesive substance (27) which binds an assembly region (13) of the assembly face (12), which region is peripheral to the port (11), to a connection region (26) of the connection face (25), which region is peripheral to the opening (24), the opening (24) and the port (11) corresponding to one another, the adhesive substance (27) comprising an epoxy adhesive, a polyurethane adhesive, an acrylic adhesive or a hybrid adhesive, the hybrid adhesive comprising at least two chemical functions chosen from the epoxy function, the cyanoacrylate function, the acrylic function or the polyurethane function,
the device being **characterized in that** the connection end piece comprises an internal shim (28), which is advantageously annular or oblong, projects relative to the connection region (26) and is circumscribed by said connection region (26), the internal shim (28) being configured to define a space, referred to as the adhesion space (30), between the connection region (26) and the assembly region (13), in which space the adhesive substance (27) is received.

2. Heat exchange device according to claim 1, wherein the adhesive substance (27) binds the assembly region (13) to the connection region (26) in a mechanical, advantageously chemical, and sealing manner.

3. Heat exchange device according to either claim 1 or claim 2, wherein the end piece also comprises a peripheral shim (29) which projects relative to the connection region (26) and which circumscribes the connection region (26) so as to delimit, with the internal shim (28), the adhesion space (30).

4. Heat exchange device according to any of claims 1 to 3, wherein a seal (32), advantageously an O-ring seal or a lip seal made of EPDM or silicon, is arranged in a groove (33) provided on the connection face (25), and inserted between the opening (24) and the internal shim (28), said internal shim (28) being interposed between the adhesive substance (27) and the groove (33), and the seal (32) is advantageously in a compressed state within a range of 10% to 35% with respect to the free state volume thereof.

5. Heat exchange device according to any of claims 1 to 4, wherein the ratio between the surface area of the connection region (26) and the surface area of the port (11) is adjusted so that the joint between the connection face (25) and the assembly region (13) has a tensile strength greater than 1 MPa, advantageously greater than 1.6 MPa, even more advantageously greater than 4.3 MPa.

6. Heat exchange device according to any of claims 1 to 4, wherein the ratio between the surface area of the connection region (26) and the surface area of the port (11) is adjusted so that the joint between the connection face (25) and the assembly region (13) is sealed when a fluid is circulated at a pressure greater than 1 bar, advantageously greater than 3 bar, even more advantageously greater than 7 bar.

7. Motor vehicle provided with a battery pack coupled to the heat exchange device according to any of claims 1 to 6 for the purpose of regulating the temperature of the battery pack by means of said heat exchange device.

8. Method for fluid connection of a pipe, by means of a connection end piece (20), to a main member (10) which is provided with a substantially planar assembly face (12) and comprises aluminum, said main member (10) being provided with a fluid circulation channel which leads to a port (11) arranged on the assembly face (12), the connection end piece (20) comprising a planar base, referred to as the connection base (22), the connection base (22) comprising a face, referred to as the connection face (25), through which an opening (24) of a channel, referred to as the connection channel (23), of said connection end piece (20) extends, the method comprising execution of the following steps:
a) a first step of preparing the surface of an assembly region (13) which is peripheral to the port (11), the first step comprising a laser treatment and/or an abrasion treatment and/or a chemical, advantageously electro-chemical, treatment;
b) a step of depositing an adhesive substance (27) on the assembly region (13) and/or on a connection region (26) of the connection face (25), which connection region is peripheral to the opening (24), the adhesive substance (27) comprising an epoxy adhesive, a polyurethane adhesive, an acrylic adhesive or a hybrid adhesive, the hybrid adhesive comprising at least two chemical functions from the epoxy function, the cyanoacrylate function, the acrylic function or the polyurethane function;
c) a step of joining the assembly region (13) and the connection face (25)
the method being **characterized in that** the connection end piece comprising an internal shim (28), which is advantageously annular or oblong, projects relative to the connection region (26) and is circumscribed by said connection region (26), the internal shim (28) being configured to define a space, referred to as the adhesion space (30), between the connection region (26) and the assembly region (13), in which space the adhesive substance (27) deposited during execution of step b) is received.

9. Fluid connection method according to claim 8, wherein said method comprises a step d) of heat treatment which is intended to cross-link the adhesive substance (27).

10. Fluid connection method according to either claim 8 or claim 9, wherein step c) is preceded by a step c0) which comprises positioning a seal (32), in particular an O-ring seal or a lip seal, in a groove (33) provided on the connection face (25) and inserted between the opening (24) and the connection region (26).

11. Fluid connection method according to claim 10, wherein joining step c) comprises applying a force, referred to as the joining force, which is suitable for keeping the seal (32) compressed in a range of 10% to 35% until a predetermined level of cross-linking of the adhesive substance (27) is reached, the predetermined cross-linking being cross-linking which makes it possible to keep the compression of the seal (32) at a compression between 10% and 35% as soon as the joining force is no longer applied.

12. Fluid connection method according to any of claims 8 to 11, wherein the ratio between the surface area of the connection region (26) and the surface area of the port (11) is adjusted so that the joint between the connection face (25) and the assembly region (13) at the end of step d) has a tensile strength greater than 1 MPa, advantageously greater than 1.6 MPa, even more advantageously greater than 4.3 MPa.

13. Fluid connection method according to any of claims 8 to 11, wherein the ratio between the surface area of the connection region (26) and the surface area of the port (11) is adjusted so that the joint between the connection face (25) and the assembly region (13) at the end of step d) is sealed when a fluid is circulated at a pressure greater than 1 bar, advantageously greater than 3 bar, even more advantageously greater than 7 bar.

14. Fluid connection method according to any of claims 8 to 13, wherein the first preparation step comprises removing a layer of native aluminum oxide which is likely to be present on the assembly region (13) and adjusting the roughness of said assembly region (13) in a roughness range between 1.4 µm and 2.6 µm, advantageously greater than 1.9 µm, the first step involving a LASER method or a mechanical abrasion method.

15. Fluid connection method according to any of claims 8 to 13, wherein the first preparation step comprises forming an adhesion layer (14) on the assembly region (13), and the adhesion layer (14) is advantageously formed according to at least one of the following sub-steps:
- anodization or a chemical conversion treatment of the assembly region (13)
- the formation of a layer of Ti/Zr on the assembly region (13).

16. Fluid connection method according to any of claims 8 to 15, wherein said method comprises a second step b0) of preparing the surface of the connection face (25), which is executed before step b), the second step b0) comprises a plasma treatment and/or a chemical treatment and/or a laser treatment which is suitable for giving the connection face (25) a surface energy greater than 36 mN/m, advantageously greater than 50 mN/m.
